# EUROPEAN PATENT APPLICATION

(11) **EP 4 608 018 A1**
(43) Date of publication of application: **27.08.2025**
(21) Application number: 22966689.6
(22) Date of filing: 28.11.2022
(51) Int. Cl.: H04W 52/02

(54) **ENERGY-SAVING METHOD AND RELATED DEVICE**

(71) Applicant: Huawei Technologies Co., Ltd., Shenzhen, Guangdong 518129 (CN)
(72) Inventor: XIONG, Jing, Shenzhen, Guangdong 518129 (CN)
(74) Representative: Gill Jennings & Every LLP
(86) International application number: PCT/CN2022/134646
(87) International publication number: WO 2024/113084

(57) **Abstract**

This application provides an energy saving method and a related device, to implement, by dynamically shutting down some or all components in a radio frequency module including N components, a plurality of different energy saving modes of the radio frequency module, so as to improve flexibility of energy saving implementation and improve an energy saving effect. **In** the method, the radio frequency module operates a target energy saving mode in M energy saving modes, where M is an integer greater than or equal to 2. The radio frequency module includes the N components, and when P components in the N components are shut down, the radio frequency module operates one energy saving mode in the M energy saving modes, where N is an integer greater than or equal to 2, and P is a positive integer.

## Description

### TECHNICAL FIELD

This application relates to the communication field, and in particular, to an energy saving method and a related device.

### BACKGROUND

As wireless communication technologies develop from 2G, 3G, and 4G to 5G, future 6G, and the like, network communication standards also evolve continuously, and requirements for bearer capabilities of network devices are increasingly high. The network device may improve the bearer capability of the network device by adding a component like a filter or a power amplifier (power amplifier, PA).

However, due to an increase of components in the network device, power consumption of the network device is greatly increased. Therefore, how to implement energy saving optimization of the network device is an urgent technical problem to be resolved.

### SUMMARY

This application provides an energy saving method and a related device, to implement, by dynamically shutting down some or all components in a radio frequency module including N components, a plurality of different energy saving modes of the radio frequency module, so as to improve flexibility of energy saving implementation and improve an energy saving effect.

A first aspect of this application provides an energy saving method. The method is applied to a radio frequency module in a network device, and the method is performed by the radio frequency module, or the method is performed by some components (for example, a processor, a chip, or a chip system) in the radio frequency module, or the method may be implemented by a logical module or software that can implement all or some functions of the radio frequency module. In the first aspect and possible implementations of the first aspect, an example in which the method is performed by the radio frequency module is used for description. In the method, the radio frequency module operates a target energy saving mode in M energy saving modes, where M is an integer greater than or equal to 2. The radio frequency module includes N components, and when P components in the N components are shut down, the radio frequency module operates one energy saving mode in the M energy saving modes, where N is an integer greater than or equal to 2, and P is a positive integer.

According to the foregoing technical solution, the radio frequency module may operate the target energy saving mode in the M energy saving modes, where M is an integer greater than or equal to 2. In the radio frequency module including the N components, when the P components in the N components are shut down, the radio frequency module may operate one energy saving mode in the M energy saving modes. The target energy saving mode is one energy saving mode in the M energy saving modes. Therefore, compared with an implementation in which energy saving is implemented by using a fixed component combination, this implementation implements a plurality of different energy saving modes of the radio frequency module by dynamically shutting down some or all components in the radio frequency module including the N components, thereby improving flexibility of energy saving implementation and improving an energy saving effect.

Optionally, the radio frequency module may be configured to process a radio frequency signal. The radio frequency module may be replaced with a radio frequency signal processing module, a radio frequency link module, a radio frequency processing module, or the like, or may have another name. This is not limited herein. Similarly, a processing module mentioned below may be configured to process a baseband signal. The processing module may be replaced with a baseband signal processing module, a baseband processing module, or the like, or may have another name. This is not limited herein.

In a possible implementation of the first aspect, the N components include at least two of the following: a power amplifier, a digital-to-analog converter, an analog-to-digital converter, or a filter.

It may be understood that the N components are configured to process a radio frequency signal, and may further include another component in addition to the foregoing at least two components, for example, a possible component configured to implement at least one of functions of encoding, rate matching, scrambling, modulation, layer mapping, precoding, resource element (resource element, RE) mapping, digital beamforming (beamforming, BF), inverse fast Fourier transform (invert fast Fourier transform, IFFT), cyclic prefix (cyclic prefix, CP) addition, and analog BF, or a possible component configured to implement at least one of functions of decoding, de-rate matching, descrambling, demodulation, and inverse discrete Fourier transform (inverse discrete Fourier transform, IDFT), or a component RU configured to implement at least one of functions of channel equalization (or channel estimation), RE demapping, digital BF, fast Fourier transform (fast Fourier transform, FFT), CP removal, and analog BF.

In a possible implementation of the first aspect, the method further includes: The radio frequency module receives first information, where the first information indicates at least one of the target energy saving mode, an energy saving manner, and energy saving time information. That the radio frequency module operates a target energy saving mode in M energy saving modes includes: The radio frequency module operates the target energy saving mode in the M energy saving modes based on the first information.

According to the foregoing technical solution, the radio frequency module may receive the first information indicating at least one of the target energy saving mode, the energy saving manner, and the energy saving time information, so that the radio frequency module operates the target energy saving mode based on the indication of the first information.

For example, when the first information indicates at least the target energy saving mode, the radio frequency module may determine, based on the indication of the first information, to operate the target energy saving mode in the M energy saving modes.

For another example, when the first information indicates at least the energy saving manner, the radio frequency module may determine, based on the indication of the first information, to operate the energy saving manner indicated by the first information.

For another example, when the first information indicates at least the energy saving time information, the radio frequency module may determine, based on the indication of the first information, to operate an energy saving mode in a time period indicated by the energy saving time information.

Optionally, the radio frequency module may alternatively obtain the first information in another manner. For example, the radio frequency module obtains the first information by receiving a user operation instruction through an input/input interface (for example, a mouse, a keyboard, or a touchscreen). For another example, when the radio frequency module locally determines, based on calculation, that energy saving is to be performed, the radio frequency module generates the first information locally. Alternatively, there may be another implementation. This is not limited herein.

In a possible implementation of the first aspect, the energy saving manner includes at least one of the following: channel shutdown, subframe shutdown, carrier shutdown, deep sleep, or symbol shutdown.

According to the foregoing technical solution, when the first information indicates the energy saving manner, the energy saving manner indicated by the first information may be implemented based on at least one of the foregoing items, to improve flexibility of implementing the energy saving manner.

Optionally, in addition to at least one of the foregoing items, the energy saving manner may be implemented in another manner, for example, cell sleep, power-off, or another possible energy saving manner. This is not limited herein.

In a possible implementation of the first aspect, the energy saving time information includes at least one of the following: a start moment, an end moment, or duration.

According to the foregoing technical solution, when the first information indicates the energy saving time information, the energy saving time information indicated by the first information may be implemented based on at least one of the foregoing items, to improve flexibility of energy saving time configuration.

In a possible implementation of the first aspect, the first information is from the processing module, and the radio frequency module and the processing module are in a same network device.

According to the foregoing technical solution, when the first information is from the processing module, because the radio frequency module and the processing module are in the same network device, energy saving control of the radio frequency module can be implemented in the same network device, so that timeliness of energy saving control can be improved, and energy saving control can be quickly implemented.

Optionally, the processing module is a baseband unit (baseband unit, BBU).

Optionally, the radio frequency module is any one of the following: a radio remote unit (radio remote unit, RRU) mode, an active antenna unit (active antenna unit, AAU), or a remote relay node (remote relay node, RRN).

Optionally, the radio frequency module and the processing module may be in different devices. For example, the processing module is in an external device of the radio frequency module. For another example, the processing module is in a network management device (for example, an operations support system (operations support system, OSS) or a distributed base station system (distributed base station system, DBS)), or there may be another implementation. This is not limited herein.

In a possible implementation of the first aspect, the method further includes: The radio frequency module sends second information, where the second information indicates that the M energy saving modes are supported.

According to the foregoing technical solution, before the radio frequency module operates the target energy saving mode in the M energy saving modes, the radio frequency module may further send the second information indicating that the radio frequency module supports the M energy saving modes, so that a receiver of the second information can use the second information as one of bases of determining the first information.

A second aspect of this application provides an energy saving method. The method is applied to a processing module, and the method is performed by the processing module, or the method is performed by some components (for example, a processor, a chip, or a chip system) in the processing module, or the method may be implemented by a logical module or software that can implement all or some functions of the processing module. In the second aspect and possible implementations of the second aspect, an example in which the method is performed by the processing module is used for description. In the method, the processing module determines first information, where the first information indicates a target energy saving mode in M energy saving modes, and M is an integer greater than or equal to 2; and the processing module sends the first information to a radio frequency module. The radio frequency module includes N components, and when P components in the N components are shut down, the radio frequency module operates one energy saving mode in the M energy saving modes, where N is an integer greater than or equal to 2, and P is a positive integer.

According to the foregoing technical solution, the first information determined and sent by the processing module indicates the target energy saving mode in the M energy saving modes, so that after receiving the first information, the radio frequency module can operate the target energy saving mode in the M energy saving modes, where M is an integer greater than or equal to 2. In the radio frequency module including the N components, when the P components in the N components are shut down, the radio frequency module may operate one energy saving mode in the M energy saving modes. The target energy saving mode is one energy saving mode in the M energy saving modes. Therefore, compared with an implementation in which energy saving is implemented by using a fixed component combination, this implementation implements a plurality of different energy saving modes of the radio frequency module by dynamically shutting down some or all components in the radio frequency module including the N components, thereby improving flexibility of energy saving implementation and improving an energy saving effect.

It should be understood that, in this application, the processing module is configured to implement energy saving control of the radio frequency module based on the first information, and the processing module may implement energy saving control in a plurality of manners.

In a possible implementation, the radio frequency module and the processing module are in a same network device. Because the radio frequency module and the processing module are in the same network device, energy saving control of the radio frequency module can be implemented in the same network device, so that timeliness of energy saving control can be improved, and energy saving control can be quickly implemented. For example, the processing module is a baseband unit (baseband unit, BBU), and the radio frequency module is any one of the following: a radio remote unit (radio remote unit, RRU) mode, an active antenna unit (active antenna unit, AAU), or a remote relay node (remote relay node, RRN).

In another possible implementation, the radio frequency module and the processing module may be in different devices. For example, the processing module is in an external device of the radio frequency module. For another example, the processing module is in a network management device (for example, an operations support system (operations support system, OSS) or a distributed base station system (distributed base station system, DBS)), or there may be another implementation. This is not limited herein.

In a possible implementation of the second aspect, the N components include at least two of the following: a power amplifier, a digital-to-analog converter, an analog-to-digital converter, or a filter.

It may be understood that the N components are configured to process a radio frequency signal, and may further include another component in addition to the foregoing at least two components, for example, a possible component configured to implement at least one of functions of encoding, rate matching, scrambling, modulation, layer mapping, precoding, resource element (resource element, RE) mapping, digital beamforming (beamforming, BF), inverse fast Fourier transform (invert fast Fourier transform, IFFT), cyclic prefix (cyclic prefix, CP) addition, and analog BF, or a possible component configured to implement at least one of functions of decoding, de-rate matching, descrambling, demodulation, and inverse discrete Fourier transform (inverse discrete Fourier transform, IDFT), or a component RU configured to implement at least one of functions of channel equalization (or channel estimation), RE demapping, digital BF, fast Fourier transform (fast Fourier transform, FFT), CP removal, and analog BF.

In a possible implementation of the second aspect, the first information further indicates at least one of an energy saving manner and energy saving time information.

According to the foregoing technical solution, the first information may further indicate at least one of the energy saving manner and the energy saving time information, so that the radio frequency module operates the target energy saving mode based on the indication of the first information.

For example, when the first information indicates at least the energy saving manner, the radio frequency module may determine, based on the indication of the first information, to operate the energy saving manner indicated by the first information.

For another example, when the first information indicates at least the energy saving time information, the radio frequency module may determine, based on the indication of the first information, to operate an energy saving mode in a time period indicated by the energy saving time information.

In a possible implementation of the second aspect, the energy saving manner includes at least one of the following: channel shutdown, subframe shutdown, carrier shutdown, deep sleep, or symbol shutdown.

According to the foregoing technical solution, when the first information indicates the energy saving manner, the energy saving manner indicated by the first information may be implemented based on at least one of the foregoing items, to improve flexibility of implementing the energy saving manner.

Optionally, in addition to at least one of the foregoing items, the energy saving manner may be implemented in another manner, for example, cell sleep, power-off, or another possible energy saving manner. This is not limited herein.

In a possible implementation of the second aspect, the energy saving time information includes at least one of the following: a start moment, an end moment, or duration.

According to the foregoing technical solution, when the first information indicates the energy saving time information, the energy saving time information indicated by the first information may be implemented based on at least one of the foregoing items, to improve flexibility of energy saving time configuration.

In a possible implementation of the second aspect, the method further includes: The processing module receives second information, where the second information indicates that the M energy saving modes are supported. The first information is determined based on at least the second information.

According to the foregoing technical solution, before the processing module determines the first information, the processing module may receive the second information indicating that the radio frequency module supports the M energy saving modes, so that the processing module determines the first information based on the second information.

In a possible implementation of the second aspect, the first information is determined based on at least historical traffic information.

According to the foregoing technical solution, the first information indicates at least one of the target energy saving mode, the energy saving manner, and the energy saving time information. When the first information is determined based on at least the historical traffic information, the radio frequency module can be controlled to save energy, based on the historical traffic information, when traffic is not busy (or a busy degree is low), to avoid or reduce impact of an energy saving implementation process.

A third aspect of this application provides a communication apparatus. The communication apparatus can implement the method according to any one of the first aspect or the possible implementations of the first aspect. The communication apparatus includes a corresponding unit or module configured to perform the foregoing method. The unit or module included in the communication apparatus may be implemented by software and/or hardware. For example, the apparatus may be a radio frequency module, or the apparatus may be a component (for example, a processor, a chip, or a chip system) in the radio frequency module, or the apparatus may be a logic module or software that can implement all or some functions of the radio frequency module.

The communication apparatus includes a processing unit. The processing unit is configured to operate a target energy saving mode in M energy saving modes, where M is an integer greater than or equal to 2. The radio frequency module includes N components, and when P components in the N components are shut down, the radio frequency module operates one energy saving mode in the M energy saving modes, where N is an integer greater than or equal to 2, and P is a positive integer.

In a possible implementation of the third aspect, the N components include at least two of the following: a power amplifier, a digital-to-analog converter, an analog-to-digital converter, or a filter.

In a possible implementation of the third aspect, the apparatus further includes a transceiver unit. The transceiver unit is configured to receive first information, where the first information indicates at least one of the target energy saving mode, an energy saving manner, and energy saving time information. The processing unit is specifically configured to operate the target energy saving mode in the M energy saving modes based on the first information.

In a possible implementation of the third aspect, the energy saving manner includes at least one of the following: channel shutdown, subframe shutdown, carrier shutdown, deep sleep, or symbol shutdown.

In a possible implementation of the third aspect, the energy saving time information includes at least one of the following: a start moment, an end moment, or duration.

In a possible implementation of the third aspect, the first information is from the processing module, and the radio frequency module and the processing module are in a same network device.

In a possible implementation of the third aspect, the processing module is a baseband unit BBU.

In a possible implementation of the third aspect, the radio frequency module is any one of the following: a radio remote unit RRU, an active antenna unit AAU, or a remote relay node RRN.

In a possible implementation of the third aspect, the apparatus further includes a transceiver unit. The transceiver unit is configured to send second information, where the second information indicates that the M energy saving modes are supported.

A fourth aspect of this application provides a communication apparatus. The communication apparatus can implement the method according to any one of the second aspect or the possible implementations of the second aspect. The communication apparatus includes a corresponding unit or module configured to perform the foregoing method. The unit or module included in the communication apparatus may be implemented by software and/or hardware. For example, the apparatus may be a processing module, or the apparatus may be a component (for example, a processor, a chip, or a chip system) in the processing module, or the apparatus may be a logic module or software that can implement all or some functions of the processing module.

The communication apparatus includes a processing unit and a transceiver unit. The processing unit is configured to determine first information, where the first information indicates a target energy saving mode in M energy saving modes, and M is an integer greater than or equal to 2. The transceiver unit is configured to send the first information to a radio frequency module. The radio frequency module includes N components, and when P components in the N components are shut down, the radio frequency module operates one energy saving mode in the M energy saving modes, where N is an integer greater than or equal to 2, and P is a positive integer.

In a possible implementation of the fourth aspect, the N components include at least two of the following: a power amplifier, a digital-to-analog converter, an analog-to-digital converter, or a filter.

In a possible implementation of the fourth aspect, the first information further indicates at least one of an energy saving manner and energy saving time information.

In a possible implementation of the fourth aspect, the energy saving manner includes at least one of the following: channel shutdown, subframe shutdown, carrier shutdown, deep sleep, or symbol shutdown.

In a possible implementation of the fourth aspect, the energy saving time information includes at least one of the following: a start moment, an end moment, or duration.

In a possible implementation of the fourth aspect, the radio frequency module and the processing module are in a same network device.

In a possible implementation of the fourth aspect, the processing module is a baseband unit BBU.

In a possible implementation of the fourth aspect, the radio frequency module is any one of the following: a radio remote unit RRU, an active antenna unit AAU, or a remote relay node RRN.

In a possible implementation of the fourth aspect, the transceiver unit is further configured to receive second information, where the second information indicates that the M energy saving modes are supported. The first information is determined based on at least the second information.

In a possible implementation of the fourth aspect, the first information is determined based on at least historical traffic information.

A fifth aspect of this application provides a communication apparatus, including at least one processor. The at least one processor is coupled to a memory, and the processor is configured to perform and implement the method according to any one of the first aspect or the possible implementations of the first aspect, or the processor is configured to perform and implement the method according to any one of the second aspect or the possible implementations of the second aspect.

For example, the memory is configured to store a program or instructions, and the at least one processor is configured to execute the program or the instructions, so that the apparatus implements the method according to any one of the first aspect or the possible implementations of the first aspect, or the apparatus implements the method according to any one of the second aspect or the possible implementations of the second aspect.

A sixth aspect of this application provides a communication apparatus, including at least one logic circuit and an input/output interface. The logic circuit is configured to perform the method according to any one of the first aspect or the possible implementations of the first aspect, or the logic circuit is configured to perform the method according to any one of the second aspect or the possible implementations of the second aspect.

A seventh aspect of this application provides a computer-readable storage medium that stores one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect.

An eighth aspect of this application provides a computer program product (or referred to as a computer program). When the computer program product is executed by a processor, the processor performs the method according to any one of the first aspect or the possible implementations of the first aspect, or the processor performs the method according to any one of the second aspect or the possible implementations of the second aspect.

A ninth aspect of this application provides a chip system. The chip system includes at least one processor, configured to support a communication apparatus in implementing a function in any one of the first aspect or the possible implementations of the first aspect, or support the communication apparatus in implementing a function in any one of the second aspect or the possible implementations of the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A tenth aspect of this application provides a communication system. The communication system includes the communication apparatus in the third aspect and the call apparatus in the fourth aspect, or the communication system includes the communication apparatus in the fifth aspect, or the communication system includes the communication apparatus in the sixth aspect.

For the technical effect brought by any one of the design manners of the third aspect to the tenth aspect, refer to the technical effect brought by different design manners of the first aspect or the second aspect. Details are not described herein again.

### BRIEF DESCRIPTION OF DRAWINGS

FIG. 1 to FIG. 3 are some diagrams of a communication system according to this application;
FIG. 4 is a diagram of an energy saving method according to this application;
FIG. 5, FIG. 6a, and FIG. 6b are some diagrams of application scenarios according to this application; and
FIG. 7 to FIG. 9 are some diagrams of communication apparatuses according to this application.

### DESCRIPTION OF EMBODIMENTS

The following describes technical solutions of this application with reference to accompanying drawings. All other solutions obtained by a person of ordinary skill in the art based on this application without creative efforts shall fall within the protection scope of this application.

Some terms in this application are first described, to help a person skilled in the art have a better understanding.
(1) A terminal device may be a wireless terminal device that can receive scheduling and indication information of a network device. The wireless terminal device may be a device that provides a user with voice and/or data connectivity, or a handheld device with a wireless connection function, or another processing device connected to a wireless modem.
   The terminal device may communicate with one or more core networks or the internet over a radio access network (radio access network, RAN). The terminal device may be a mobile terminal device, for example, a mobile phone (or referred to as a "cellular" phone or a mobile phone (mobile phone)), a computer, or a data card. Alternatively, the terminal device may be a portable, pocket-sized, handheld, computer-built-in, or vehicle-mounted mobile apparatus that exchanges voice and/or data with the radio access network. Alternatively, the terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station, a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), a customer premises equipment (customer premises equipment, CPE), a terminal (terminal), user equipment (user equipment, UE), a mobile terminal (mobile terminal, MT), or the like. Alternatively, the terminal device may be a wearable device or a terminal device in a next generation communication system, for example, a terminal device in a 6th generation (6-Generation, 6G) communication system or a terminal device in a future evolved public land mobile network (public land mobile network, PLMN).
(2) A network device may be a device in a wireless network. For example, the network device may be a radio access network (radio access network, RAN) node (or device) that connects a terminal device to a wireless network, and may also be referred to as a base station. Some examples of the RAN device are: a next generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may be a module or a unit that implements part of functions of the foregoing base station. The module or the unit may be referred to as an access network module, an access network element, or an access network unit. This is not limited. For example, the network device may be a central unit (central unit, CU) node, a distributed unit (distributed unit, DU) node, or a RAN device including a CU node and a DU node. Alternatively, the network device may be a module or a unit in an open access network (open RAN, ORAN, or O-RAN). For example, the network device may be a CU, a DU, a CU-CP, a CU-UP, or a radio unit (radio unit, RU) in the O-RAN.

In some implementations, the network device may also include a satellite, an aerial vehicle, and the like.

In addition, in another possible case, the network device may be another apparatus providing a wireless communication function for the terminal device. A specific technology and a specific device form that are used by the network device are not limited in this application. For ease of description, this is not limited in this application.

Optionally, the network device may also include a core network device. The core network device includes, for example, an access and mobility management function (access and mobility management function, AMF), a user plane function (user plane function, UPF), or a session management function (session management function, SMF).

In this application, an apparatus configured to implement a function of the network device may be a network device, or may be an apparatus, for example, a processor, a chip, or a chip system, that can support the network device in implementing the function. The apparatus may be installed in the network device, or may be used together with the network device. In the technical solutions provided in this application, an example in which the apparatus configured to implement the function of the network device is the network device is used for describing the technical solutions provided in this application.

In this application, an apparatus configured to implement a function of the terminal device may be a terminal device, or may be an apparatus, for example, a processor, a chip, or a chip system, that can support the terminal device in implementing the function. The apparatus may be installed in the terminal device or used together with the terminal device. In the technical solutions provided in this application, an example in which the apparatus configured to implement the function of the terminal device is the terminal device is used for describing the technical solutions provided in this application.

(3) The terms "system" and "network" may be used interchangeably in this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, an O-RAN system, or a new radio vehicle to everything (NR vehicle to everything, NR V2X) system; or a system in which a plurality of access technologies (such as LTE and 5G) are hybrid networked; or a device-to-device (device-to-device, D2D) communication system, a machine-to-machine (machine to machine, M2M) communication system, an internet of things (Internet of Things, IoT), or an uncrewed aerial vehicle communication system; or a communication system that supports a plurality of wireless technologies such as LTE and NR technologies; or a non-ground communication system, such as a satellite communication system or a high-altitude communication platform. In addition, optionally, this application may be applied to a narrowband internet of things (narrow band-internet of things, NB-IoT) system, an enhanced data rate global mobile communications (global system for mobile communications, GSM) evolution system (enhanced data rate for GSM evolution, EDGE), a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a system to which a future-oriented communication technology is applied, or another communication system.

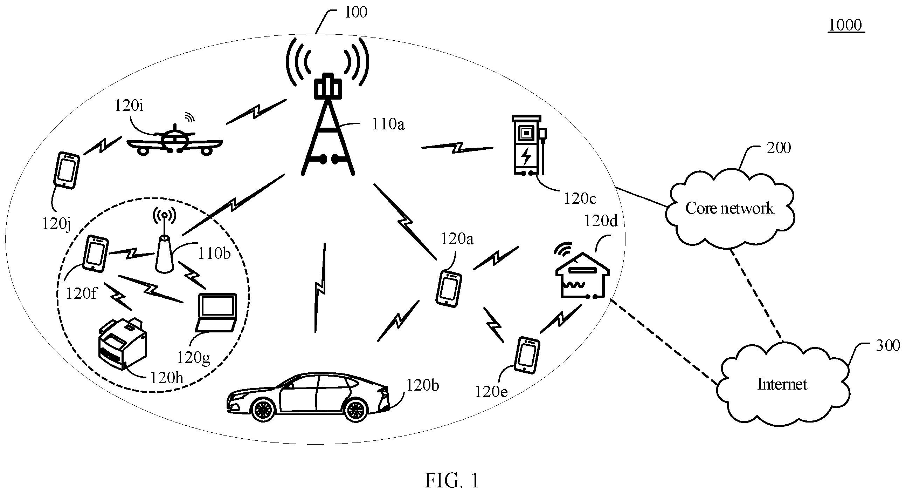

FIG. 1 is a diagram of an application scenario according to an embodiment of this application. As shown in FIG. 1, the solutions provided in this application may be applied to a communication system 1000 shown in FIG. 1. The communication system 1000 includes a radio access network (radio access network, RAN) 100 and a core network 200. The RAN 100 may include at least one access network device (for example, 110a and 110b in FIG. 1, which are collectively referred to as 110). The RAN 100 may further include at least one terminal (for example, 120a to 120j in FIG. 1, which are collectively referred to as 120). The terminals 120a to 120j are connected to the access network devices 110a and 110b in a wireless manner. The access network devices 110a and 110b are connected to the core network 200 in a wireless or wired manner. A core network device in the core network and the access network device in the radio access network may be different physical devices, or may be a same physical device that integrates a logical function of the core network and a logical function of the radio access network. This is not limited. The terminals may be connected to each other in a wireless manner. The access network devices may be connected to each other in a wired or wireless manner. FIG. 1 is merely a diagram. The communication system may further include another network device, for example, a wireless relay device and/or a wireless backhaul device (not shown in FIG. 1).

For example, in FIG. 1, the RAN 100 may be configured as a cellular system related to the third generation partnership project (3rd generation partnership project, 3GPP). For example, the RAN 100 may be configured as a 4th generation (4th generation, 4G) mobile communication system, a 5th generation (5th generation, 5G) mobile communication system, a wireless fidelity (wireless fidelity, Wi-Fi) system, a future-oriented evolved system (for example, a 6G mobile communication system), or a communication system integrating at least two of the foregoing systems. 5G may also be referred to as new radio (new radio, NR). Alternatively, the RAN 100 may be configured as an open access network (open RAN, ORAN, or O-RAN).

The access network device in embodiments of this application is sometimes also referred to as an access node. The access network device has a wireless transceiver function, and can communicate with a terminal.

In a possible scenario, the access network device may be a base station (base station), an evolved base station (evolved NodeB, eNodeB), a transmission reception point (transmission reception point, TRP), a next generation base station (next generation base station, gNB) in a 5G mobile communication system, a next generation base station in a 6th generation (6th generation, 6G) mobile communication system, a base station in a future mobile communication system, an access node in a Wi-Fi system, or the like. The access network device may be a macro base station (for example, 110a in FIG. 1), a micro base station or an indoor station (for example, 110b in FIG. 1), a relay node, a donor node, or a radio controller in a cloud radio access network (cloud radio access network, CRAN) scenario. Optionally, the access network device may alternatively be a server, a wearable device, a vehicle-mounted device, or the like. For example, an access network device in a vehicle-to-everything (vehicle-to-everything, V2X) technology may be a road side unit (road side unit, RSU). A plurality of access network devices in the communication system may be base stations of a same type, or may be base stations of different types. The base station may communicate with the terminal, or may communicate with the terminal through a relay station. The terminal may communicate with a plurality of base stations of different access technologies.

In another possible scenario, the access network device may be a module, a unit, a circuit, or the like that can implement part of functions of the base station. The device may also be referred to as an access network module, an access network element, an access network unit, or the like. This is not limited. For example, the access network device may be a central unit (central unit, CU), a distributed unit (distributed unit, DU), a CU-control plane (control plane, CP), a CU-user plane (user plane, UP), or a radio unit (radio unit, RU). In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. The CU (or the CU-CP and the CU-UP), the DU, and the RU can implement different protocol layer functions.

Communication between the access network device and the terminal device may comply with a specific protocol layer structure. The protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

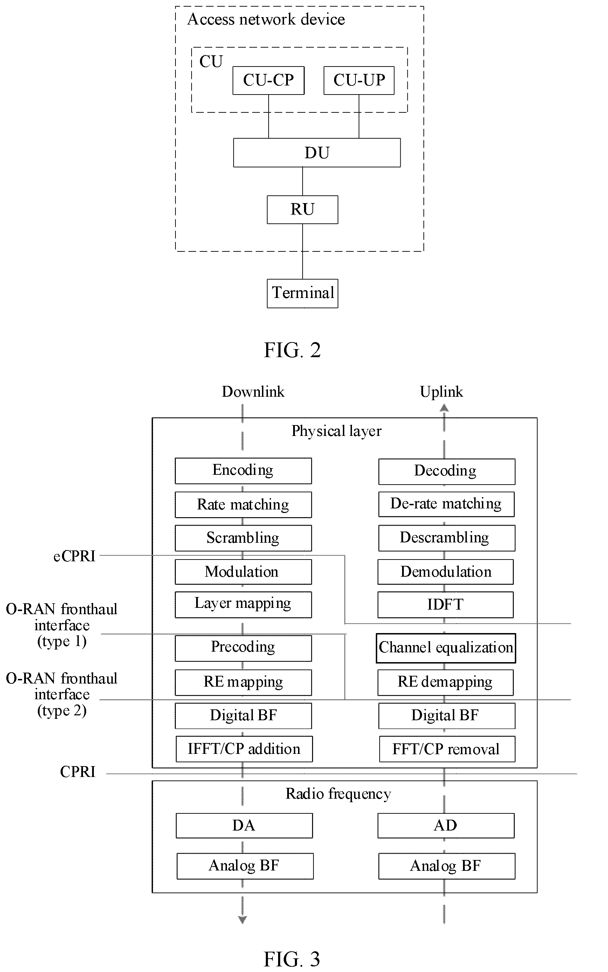

In an implementation example, as shown in FIG. 2, the access network device may include at least one CU and at least one DU. This design may be referred to as CU and DU separation. One CU may be connected to one or more DUs. The CU and the DU may be divided based on protocol layers of a wireless network. For example, functions of a PDCP layer and protocol layers (such as an RRC layer and an SDAP layer) above the PDCP layer are set on the CU, and functions of protocol layers (such as an RLC layer, a MAC layer, and a PHY layer) below the PDCP layer are set on the DU. For another example, functions of protocol layers above a PDCP layer are set on the CU, and functions of the PDCP layer and protocol layers below the PDCP layer are set on the DU. This is not limited. Names of the CU and the DU are not limited in this application. For example, the CU may be referred to as a first access network element, and the DU may be referred to as a second access network element.

The division into processing functions of the CU and the DU based on the protocol layers is merely an example, and the processing functions of the CU and the DU may alternatively be divided in another division manner. For example, the CU or the DU may be divided to have functions of more protocol layers. Alternatively, the CU or the DU is divided to have some processing functions of the protocol layers. For example, part of functions of the RLC layer and functions of a protocol layer above the RLC layer are set on the CU, and remaining functions of the RLC layer and functions of a protocol layer below the RLC layer are set on the DU. For another example, division of functions of the CU or the DU may be performed based on service types or other system requirements, for example, based on a latency. Functions whose processing time needs to satisfy a small latency requirement are set on the DU, and functions whose processing time does not need to satisfy the latency requirement are set on the CU.

The CU may be connected to the core network. Optionally, the CU may have part of functions of the core network.

Further, part of functions of the DU may be set separately. As shown in FIG. 2, the part of functions may be implemented by a radio unit (radio unit, RU). The RU may have a radio frequency function. A name of the RU is not limited in this application. For example, the RU may be referred to as a third access network element. The DU and the RU may be split or separated at the PHY layer. For example, the DU may implement a higher-layer function of the PHY layer, and the RU may implement a lower-layer function of the PHY layer or implement the lower-layer function and the radio frequency function. The higher-layer function of the PHY layer includes a function closer to the MAC layer, and the lower-layer function of the PHY layer includes a function closer to the radio frequency. A manner of splitting the DU and the RU may be various possible manners. This is not limited. There is an interface between the DU and the RU. For example, according to different splitting manners, the interface between the DU and the RU may be a common public radio interface (common public radio interface, CPRI), an enhanced common public radio interface (enhanced common public radio interface, eCPRI), or a fronthaul interface in an ORAN. Optionally, the fronthaul interface in the ORAN may be considered as a specific example of the eCPRI interface.

For example, in the O-RAN, the higher-layer function of the PHY layer includes one or more of the following: forward error correction (forward error correction, FEC) encoding/decoding, scrambling, or modulation/demodulation. The lower-layer function of the PHY layer includes one or more of the following: fast Fourier transform (fast Fourier transform, FFT) /inverse fast Fourier transform (inverse fast Fourier transform, IFFT), beamforming, extraction and filtering of a physical random access channel (physical random access channel, PRACH), or the like. The RU may perform radio frequency signal communication with the terminal device through an air interface. A precoding function of the PHY layer may be set in the DU or the RU. In some scenarios, the RU in the ORAN is similar to a transmission reception point (transmission reception point, TRP) or a remote radio head (remote radio head, RRH) in the 3GPP, and includes the lower-layer function of the physical layer.

In an implementation example, as shown in FIG. 3, an example of a CPRI interface, an eCPRI interface, and an O-RAN fronthaul interface in a possible processing procedure is provided. The O-RAN fronthaul interface is used as an example, for downlink data transmission, in a first possibility (denoted as a type 1 of the fronthaul interface), the DU is configured to implement at least one of functions of encoding, rate matching, scrambling, modulation, and layer mapping, and the RU is configured to implement at least one of functions of precoding, resource example (resource element, RE) mapping, digital beamforming (beamforming, BF), IFFT/cyclic prefix (cyclic prefix, CP) addition, digital-to-analog (digital-to-analog, DA) conversion, and analog BF. In a second possibility (denoted as a type 2 of the fronthaul interface), the DU is configured to implement at least one of functions of encoding, rate matching, scrambling, modulation, layer mapping, precoding, and RE mapping, and the RU is configured to implement at least one of functions of digital BF, IFFT/CP addition, DA conversion, and analog BF. For uplink data transmission, corresponding to the type 1 and the type 2 of the foregoing fronthaul interface, the DU is configured to implement at least one of functions of decoding, de-rate matching, descrambling, demodulation, and inverse discrete Fourier transform (inverse discrete Fourier transform, IDFT), and the RU is configured to implement at least one of functions of channel equalization (or channel estimation), RE demapping, digital BF, FFT/CP removal, analog-to-digital (analog-to-digital, AD) conversion, and analog BF.

In recent years, green energy saving has become a theme of an era. For a network device (for example, the network device may be the base stations 110a and 110b in FIG. 1, the access network device in FIG. 2, or a physical layer module and the radio frequency module in FIG. 3), how to perform energy saving and emission reduction without degrading customer experience becomes a hot topic discussed by equipment vendors and operators. For example, the network device is a base station. In a possible energy saving solution applied to the base station, the base station may implement a subframe shutdown function, a channel shutdown function, a carrier shutdown function, a deep sleep function, and the like based on control of a remote network management device.

For example, for the subframe shutdown function, the base station sleeps some components (or sleeps) in a timely manner based on a change of a service volume, and maximum sleep time needs to reach a subframe (subframe) level.

For another example, for the channel shutdown function, the base station can sleep some components in a radio frequency channel in a timely manner based on a change of a service volume, to reduce energy consumption.

For another example, for the intelligent carrier shutdown function, the base station can intelligently enable or disable transmission of a signal within a bandwidth. When a quantity of users on the current carrier is small, the base station migrates the users to another carrier that has sufficient load and shuts down the current carrier to reduce energy consumption.

However, with continuous evolution of network communication standards, a requirement for a bearer capability of the network device is increasingly high. The network device may improve the bearer capability of the network device by adding a component like a filter or a power amplifier (power amplifier, PA). Correspondingly, due to an increase of components in the network device, power consumption of the network device is greatly increased. However, in the foregoing energy saving solution applied to the base station, because a shutdown indication obtained by the base station indicates only one energy saving manner (in other words, only one energy saving function is fixedly used), each component included in the base station can have only one fixed shutdown mode. As a result, an optimal energy saving effect cannot be achieved. Therefore, how to implement energy saving optimization of the network device is an urgent technical problem to be resolved.

To resolve the problem, this application provides an energy saving method and a related device, to implement, by dynamically shutting down some or all components in a radio frequency module including N components, a plurality of different energy saving modes of the radio frequency module, so as to improve flexibility of energy saving implementation and improve an energy saving effect. The following describes, with reference to the accompanying drawings, solutions provided in this application.

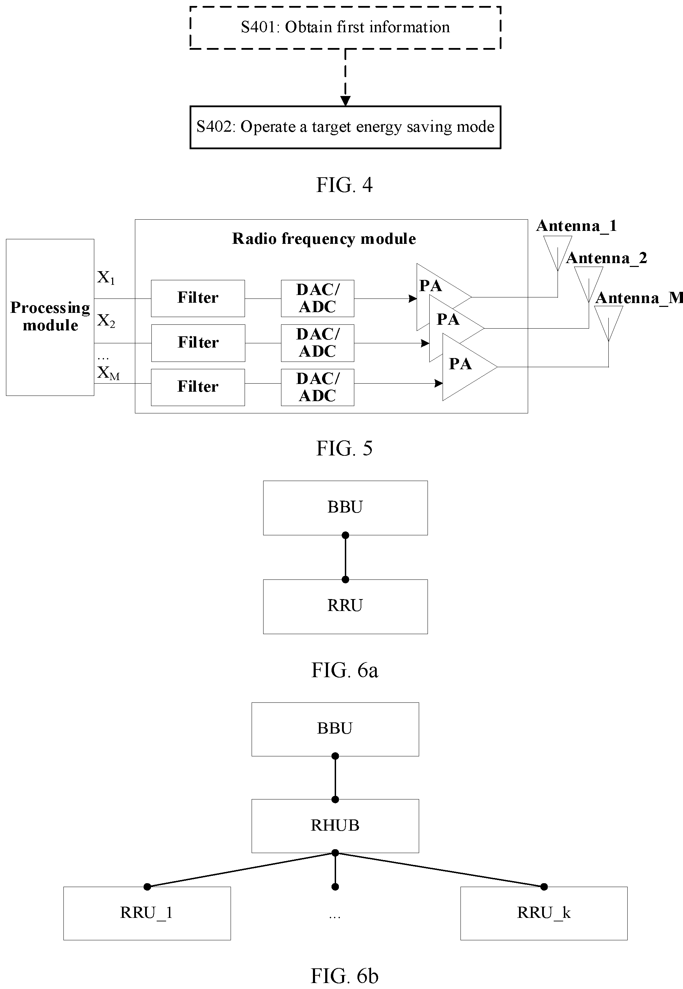

FIG. 4 is a diagram of an energy saving method according to this application. The method includes the following steps.

S401: A radio frequency module obtains first information, where the first information indicates a target energy saving mode in M energy saving modes, and M is an integer greater than or equal to 2.

S402: The radio frequency module operates the target energy saving mode.

Specifically, the radio frequency module includes N components, and when P components in the N components are shut down, the radio frequency module operates one energy saving mode in the M energy saving modes, where N is an integer greater than or equal to 2, and P is a positive integer.

In step S401, after the radio frequency module obtains the first information indicating the target energy saving mode, the radio frequency module operates the target energy saving mode based on the first information in step S402.

In a possible implementation, a default operating energy saving mode is preconfigured as the target energy saving mode of the radio frequency module before delivery. Correspondingly, step S401 is optional, in other words, the radio frequency module performs step S402 by default without performing step S401.

In another possible implementation, when the radio frequency module performs step S401, the first information may be from a processing module. The radio frequency module and the processing module are in a same network device. Specifically, when the first information is from the processing module, because the radio frequency module and the processing module are in the same network device, energy saving control of the radio frequency module can be implemented in the same network device, so that timeliness of energy saving control can be improved, and energy saving control can be quickly implemented.

Optionally, the processing module is a baseband unit (baseband unit, BBU).

Optionally, the radio frequency module is any one of the following: a radio remote unit (radio remote unit, RRU) mode, an active antenna unit (active antenna unit, AAU), or a remote relay node (remote relay node, RRN).

Optionally, the radio frequency module and the processing module may be in different devices. For example, the processing module is in an external device of the radio frequency module. For another example, the processing module is in a network management device (for example, an operations support system (operations support system, OSS) or a distributed base station system (distributed base station system, DBS)), or there may be another implementation. This is not limited herein.

It should be noted that the radio frequency module may be configured to process a radio frequency signal. The radio frequency module may be replaced with a radio frequency signal processing module, a radio frequency link module, a radio frequency processing module, or the like, or may have another name. This is not limited herein. Similarly, the processing module in the foregoing implementation example may be configured to process a baseband signal. The processing module may be replaced with a baseband signal processing module, a baseband processing module, or the like, or may have another name. This is not limited herein.

In a possible implementation, the N components in the radio frequency module include at least two of the following: a power amplifier, a digital-to-analog converter, an analog-to-digital converter, or a filter.

It may be understood that, the N components are configured to process a radio frequency signal, and in addition to the foregoing at least two components, may further include another component. The following uses a signal transmission/processing process described in FIG. 3 as an example for description.

In an implementation example, as shown in FIG. 3, in a process in which the radio frequency module is configured to perform transmission of a downlink signal, the radio frequency module may include a component configured to implement at least one of functions of encoding, rate matching, scrambling, modulation, layer mapping, precoding, resource element (resource element, RE) mapping, digital beamforming (beamforming, BF), inverse fast Fourier transform (invert fast Fourier transform, IFFT), cyclic prefix (cyclic prefix, CP) addition, and analog BF.

In another implementation example, as shown in FIG. 3, in a process in which the radio frequency module is configured to perform transmission of an uplink signal, the radio frequency module may include a component configured to implement at least one of functions of decoding, de-rate matching, descrambling, demodulation, and inverse discrete Fourier transform (inverse discrete Fourier transform, IDFT), or a component RU configured to implement at least one of functions of channel equalization (or channel estimation), RE demapping, digital BF, fast Fourier transform (fast Fourier transform, FFT), CP removal, and analog BF.

In a possible implementation, when the radio frequency module performs step S401, the first information may indicate at least one of the target energy saving mode, an energy saving manner, and energy saving time information, so that the radio frequency module operates the target energy saving mode based on the indication of the first information.

For example, when the first information indicates at least the target energy saving mode, the radio frequency module may determine, based on the indication of the first information, to operate the target energy saving mode in the M energy saving modes.

For another example, when the first information indicates at least the energy saving manner, the radio frequency module may determine, based on the indication of the first information, to operate the energy saving manner indicated by the first information.

For another example, when the first information indicates at least the energy saving time information, the radio frequency module may determine, based on the indication of the first information, to operate an energy saving mode in a time period indicated by the energy saving time information.

Optionally, the radio frequency module may alternatively obtain the first information in another manner in step S401. For example, the radio frequency module obtains the first information by receiving a user operation instruction through an input/input interface (for example, a mouse, a keyboard, or a touchscreen). For another example, when the radio frequency module locally determines, based on calculation, that energy saving is to be performed, the radio frequency module generates the first information locally. Alternatively, there may be another implementation. This is not limited herein.

In a possible implementation, the energy saving manner includes at least one of the following: channel shutdown, subframe shutdown, carrier shutdown, deep sleep, or symbol shutdown. Specifically, when the first information indicates the energy saving manner, the energy saving manner indicated by the first information may be implemented based on at least one of the foregoing items, to improve flexibility of implementing the energy saving manner.

Optionally, in addition to at least one of the foregoing items, the energy saving manner may be implemented in another manner, for example, cell sleep, power-off, or another possible energy saving manner. This is not limited herein.

In an implementation example, the following describes a plurality of implementation processes of the energy saving manner by using an application scenario shown in FIG. 5. As shown in FIG. 5, in a signal sending process, the processing module may separately send M signals to the radio frequency module through M channels, where the M signals are respectively denoted as X₁, X₂, ..., and X_{M}, so that after processing the M signals, the N components in the radio frequency module send the M signals through M antenna ports (each antenna port corresponds to one or more physical antennas). Each of the N components includes M groups of components, and each group of components in the M groups of components corresponds to a processing process of a signal in the M signals.

It should be understood that, in the example shown in FIG. 5, for example, each group of components in the M groups of components includes a filter, a digital-to-analog converter (digital-to-analog converter, DAC)/an analog-to-digital converter (analog-to-digital converter, ADC), and a PA. As described above, the component in the radio frequency module may also be implemented in another manner. Details are not described herein again.

When the method shown in FIG. 4 is applied to the example shown in FIG. 5, the radio frequency module may obtain the first information from the processing module in step S401.

When the first information indicates that the energy saving manner is channel shutdown, the radio frequency module may perform channel shutdown based on the first information in step S402. The channel shutdown may be implemented in the following implementation: For example, the radio frequency module determines, in a preconfiguration manner, to shut down k (k is a positive integer) channels in the M channels. For another example, the first information further includes indication information, and the indication information indicates a channel to be shut down. For example, the indication information may include an index, an identifier, and the like of the channel to be shut down. Then, the radio frequency module performs channel shutdown based on the indication information.

When the first information indicates that the energy saving manner is carrier shutdown, the radio frequency module may perform carrier shutdown based on the first information in step S402. The carrier shutdown may be implemented in the following implementation: For example, the radio frequency module determines, in a preconfiguration manner, to perform carrier shutdown on a cell, and shuts down k (k is a positive integer) channels in M channels corresponding to the cell. For another example, the first information further includes indication information, and the indication information indicates a cell on which carrier shutdown is performed. For example, the indication information may include an index, an identifier, and the like of the cell. Then, the radio frequency module performs carrier shutdown based on the indication information.

In a possible implementation, the energy saving time information includes at least one of the following: a start moment, an end moment, or duration. Specifically, when the first information indicates the energy saving time information, the energy saving time information indicated by the first information may be implemented based on at least one of the foregoing items, to improve flexibility of energy saving time configuration.

Optionally, a length of shutdown duration indicated by the energy saving time information is positively correlated with a quantity of components that are to be shut down and that are indicated by the target energy saving mode. For example, when the energy saving time information indicates short shutdown duration, a small quantity of components that are to be shut down and that are indicated by the target energy saving mode may be set, so that a working state of the component can be quickly restored subsequently after the shutdown duration ends. For another example, when the energy saving time information indicates long shutdown duration, a large quantity of components that are to be shut down and that are indicated by the target energy saving mode may be set, to reduce more energy consumption as much as possible, so as to further optimize energy saving.

In a possible implementation, before step S402, the radio frequency module may further send second information, where the second information indicates that the M energy saving modes are supported. Specifically, before the radio frequency module operates the target energy saving mode in the M energy saving modes, the radio frequency module may further send the second information indicating that the radio frequency module supports the M energy saving modes, so that a receiver of the second information can use the second information as one of bases of determining the first information.

According to the technical solution shown in FIG. 4, the radio frequency module operates the target energy saving mode in the M energy saving modes in step S402, where M is an integer greater than or equal to 2. In the radio frequency module including the N components, when the P components in the N components are shut down, the radio frequency module may operate one energy saving mode in the M energy saving modes. The target energy saving mode is one energy saving mode in the M energy saving modes. Therefore, compared with an implementation in which energy saving is implemented by using a fixed component combination, this implementation implements a plurality of different energy saving modes of the radio frequency module by dynamically shutting down some or all components in the radio frequency module including the N components, thereby improving flexibility of energy saving implementation and improving an energy saving effect.

In an application example, the following describes FIG. 4 and a related implementation process by using an example in which the radio frequency module is an RRU and the processing module is a BBU. For example, FIG. 4 and the related implementation process may be applied to a scenario in which a BBU and an RRU shown in FIG. 6a implement two-level networking, or may be applied to a scenario in which a BBU, k RRUs (respectively denoted as RRU_1, ..., and RRU_k, where k is a positive integer), and a remote radio unit hub (remote radio unit hub, RHUB) shown in FIG. 6b implement three-level networking, where the RHUB is configured to implement a function of converging a plurality of RRU signals.

In a possible implementation process, an RRU reports, through a message interface between the BBU and the RRU, a classification capability of a candidate energy saving feature (such as channel shutdown, subframe shutdown, and carrier shutdown) supported by the RRU (for example, a shutdown capability corresponding to channel shutdown has a plurality of levels, which correspond to different shutdown duration). When an energy saving condition is satisfied, the BBU selects an energy saving function of a corresponding level based on energy saving duration calculated based on a traffic forecast (for example, a historical traffic forecast algorithm) and delivers the energy saving function to the RRU. If no traffic is forecast to occur in next 5 seconds, the interface may indicate an RU to enable a subframe shutdown function that shut down more components. If no traffic is forecast to occur in a next hour, the interface may indicate an RU to enable a carrier shutdown function that shut down more components. Then, the RRU enables an energy saving function based on an energy saving indication delivered by the BBU.

In another possible implementation process, after an energy saving condition is satisfied, the BBU selects a corresponding energy saving function and enabling duration (the enabling duration may be specific duration, or may be multi-level duration, for example, 1 second is a level 1, 1 minute is a level 2, and 1 hour is a level 3) based on energy saving duration calculated through traffic forecast (for example, based on a historical traffic forecast algorithm) and delivers the energy saving function and the enabling duration to the RRU. Then, the RRU selects a corresponding component shutdown proportion based on an energy saving function standard and the enabling duration that are delivered by the BBU, and a capability of the RRU. For example, a symbol shutdown function is selected for a level 1, a channel shutdown function is selected for a level 2, and a carrier shutdown function may be selected for a level 3.

It can be learned from the foregoing implementation process that an energy saving function is split into different levels by adding an energy saving function enabling interface between the BBU and the RRU. This can improve energy saving gains of a current energy saving feature.

To implement functions in the methods provided in this application, a device for performing the methods may include a hardware structure and/or a software module, and implement the functions in a form of a hardware structure, a software module, or a combination of the hardware structure and the software module. Whether a function in the foregoing functions is performed by using the hardware structure, the software module, or the combination of the hardware structure and the software module depends on particular applications and design constraints of the technical solutions.

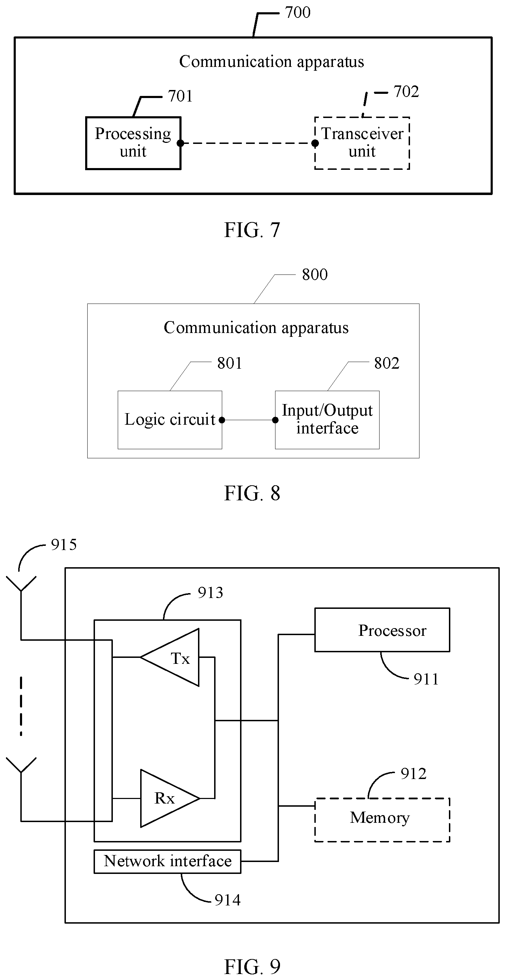

Refer to FIG. 7. An embodiment of this application provides a communication apparatus 700. The apparatus 700 includes a processing unit 701.

Optionally, the apparatus further includes a transceiver unit 702.

In an implementation example, the communication apparatus 700 can implement a function of the radio frequency module in the foregoing method embodiments, and therefore can also implement beneficial effects of the foregoing method embodiments. In this application, the communication apparatus 700 may be a radio frequency module, or may be a software module, an integrated circuit, an element, or the like in the radio frequency module, for example, a chip. This is not limited. An example in which the communication apparatus 700 is the radio frequency module is used below for description.

Specifically, the processing unit is configured to operate a target energy saving mode in M energy saving modes, where M is an integer greater than or equal to 2. The radio frequency module includes N components, and when P components in the N components are shut down, the radio frequency module operates one energy saving mode in the M energy saving modes, where N is an integer greater than or equal to 2, and P is a positive integer.

In a possible implementation, the N components include at least two of the following: a power amplifier, a digital-to-analog converter, an analog-to-digital converter, or a filter.

In a possible implementation, the apparatus further includes a transceiver unit. The transceiver unit is configured to receive first information, where the first information indicates at least one of the target energy saving mode, an energy saving manner, and energy saving time information. The processing unit is specifically configured to operate the target energy saving mode in the M energy saving modes based on the first information.

In a possible implementation, the energy saving manner includes at least one of the following: channel shutdown, subframe shutdown, carrier shutdown, deep sleep, or symbol shutdown.

In a possible implementation, the energy saving time information includes at least one of the following: a start moment, an end moment, or duration.

In a possible implementation, the first information is from the processing module, and the radio frequency module and the processing module are in a same network device.

In a possible implementation, the processing module is a baseband unit BBU.

In a possible implementation, the radio frequency module is any one of the following: a radio remote unit RRU, an active antenna unit AAU, or a remote relay node RRN.

In a possible implementation, the apparatus further includes a transceiver unit. The transceiver unit is configured to send second information, where the second information indicates that the M energy saving modes are supported.

In another implementation example, the communication apparatus 700 can implement a function of the processing module in the foregoing method embodiments, and therefore can also implement beneficial effects of the foregoing method embodiments. In this application, the communication apparatus 700 may be a processing module, or may be a software module, an integrated circuit, an element, or the like in the processing module, for example, a chip. This is not limited. An example in which the communication apparatus 700 is the processing module is used below for description.

Specifically, the processing unit is configured to determine first information, where the first information indicates a target energy saving mode in M energy saving modes, and M is an integer greater than or equal to 2. The transceiver unit is configured to send the first information to a radio frequency module. The radio frequency module includes N components, and when P components in the N components are shut down, the radio frequency module operates one energy saving mode in the M energy saving modes, where N is an integer greater than or equal to 2, and P is a positive integer.

In a possible implementation, the N components include at least two of the following: a power amplifier, a digital-to-analog converter, an analog-to-digital converter, or a filter.

In a possible implementation, the first information further indicates at least one of an energy saving manner and energy saving time information.

In a possible implementation, the energy saving manner includes at least one of the following: channel shutdown, subframe shutdown, carrier shutdown, deep sleep, or symbol shutdown.

In a possible implementation, the energy saving time information includes at least one of the following: a start moment, an end moment, or duration.

In a possible implementation, the radio frequency module and the processing module are in a same network device.

In a possible implementation, the processing module is a baseband unit BBU.

In a possible implementation, the radio frequency module is any one of the following: a radio remote unit RRU, an active antenna unit AAU, or a remote relay node RRN.

In a possible implementation, the transceiver unit is further configured to receive second information, where the second information indicates that the M energy saving modes are supported. The first information is determined based on at least the second information.

In a possible implementation, the first information is determined based on at least historical traffic information.

It should be noted that for details of content such as an information execution process of the unit of the communication apparatus 700, refer to descriptions in the foregoing method embodiments of this application. Details are not described herein again.

FIG. 8 is another diagram of a structure of a communication apparatus 800 according to this application. The communication apparatus 800 includes at least a logic circuit 801. The communication apparatus 800 may be a chip or an integrated circuit.

Optionally, the communication apparatus further includes an input/output interface 802.

The transceiver unit 702 shown in FIG. 7 may be a communication interface. The communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit.

Optionally, the logic circuit 801 may be configured to operate a target energy saving mode in M energy saving modes. The logic circuit 801 and the input/output interface 802 may perform other steps performed by the radio frequency module in any one of the foregoing examples and implement corresponding beneficial effects. Details are not described herein again.

Optionally, the logic circuit 801 may determine first information, and the input/output interface 802 may send the first information to a radio frequency module. The logic circuit 801 and the input/output interface 802 may perform other steps performed by the processing module in any one of the foregoing examples and implement corresponding beneficial effects. Details are not described herein again.

In a possible implementation, the processing unit 701 shown in FIG. 7 may be the logic circuit 801 in FIG. 8.

Optionally, the logic circuit 801 may be a processing apparatus, and some or all functions of the processing apparatus may be implemented by software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processing units (central processing units, CPUs), network processors (network processors, NPs), digital signal processors (digital signal processors, DSPs), micro controller units (micro controller units, MCUs), programmable logic devices (programmable logic devices, PLDs) or other integrated chips, or any combination of the foregoing chips or processors.

FIG. 9 is a diagram of a structure of a communication apparatus 900 in the foregoing example according to this application. The communication apparatus 900 may be specifically a communication apparatus used as a radio frequency module or a processing module in the foregoing example. For a structure of the communication apparatus, refer to the structure shown in FIG. 9.

The communication apparatus 900 includes at least one processor 911 and at least one network interface 914.

Further optionally, the communication apparatus further includes at least one memory 912, at least one transceiver 913, and one or more antennas 915. The processor 911, the memory 912, the transceiver 913, and the network interface 914 are connected, for example, through a bus. In this application, the connection may include various interfaces, transmission lines, buses, or the like. This is not limited in this embodiment. The antennas 915 are connected to the transceiver 913. The network interface 914 is configured to enable the communication apparatus to communicate with another communication device through a communication link. For example, the network interface 914 may include a network interface between the communication apparatus and a core network device, for example, an S1 interface. The network interface may include a network interface between the communication apparatus and another communication apparatus (for example, another network device or a core network device), for example, an X2 or Xn interface.

The processor 911 is mainly configured to: process a communication protocol and communication data; and control the entire communication apparatus, execute a software program, and process data of the software program. For example, the processor 911 is configured to support the communication apparatus in performing actions described in the foregoing method embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. The processor 911 in FIG. 9 may integrate functions of the baseband processor and the central processing unit. A person skilled in the art may understand that the baseband processor and the central processing unit may alternatively be processors independent of each other, and are interconnected by using a technology such as a bus. A person skilled in the art may understand that the network device may include a plurality of baseband processors to adapt to different network standards, the network device may include a plurality of central processing units to enhance a processing capability of the network device, and components of the network device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 912 may exist independently, and is connected to the processor 911. Optionally, the memory 912 and the processor 911 may be integrated together, for example, integrated in a chip. The memory 912 can store program code for executing technical solutions of embodiments of this application, and execution of the program code is controlled by the processor 911. Various computer program code executed may also be considered as a driver of the processor 911.

FIG. 9 shows only one memory and one processor. In an actual network device, there may be a plurality of processors and a plurality of memories. The memory may also be referred to as a storage medium, a storage device, or the like. The memory may be a storage element located on a same chip as the processor, that is, an on-chip storage element, or may be an independent storage element. This is not limited in embodiments of this application.

The transceiver 913 may be configured to support receiving or sending of a radio frequency signal between the communication apparatus and a terminal, and the transceiver 913 may be connected to the antennas 915. The transceiver 913 includes a transmitter Tx and a receiver Rx. Specifically, the one or more antennas 915 may receive a radio frequency signal. The receiver Rx of the transceiver 913 is configured to: receive the radio frequency signal from the antenna, convert the radio frequency signal into a digital baseband signal or a digital intermediate frequency signal, and provide the digital baseband signal or the digital intermediate frequency signal for the processor 911, so that the processor 911 further processes the digital baseband signal or the digital intermediate frequency signal, for example, performs demodulation processing and decoding processing. In addition, the transmitter Tx of the transceiver 913 is further configured to: receive a modulated digital baseband signal or a modulated digital intermediate frequency signal from the processor 911, convert the modulated digital baseband signal or the digital intermediate frequency signal into a radio frequency signal, and send the radio frequency signal through the one or more antennas 915. Specifically, the receiver Rx may selectively perform one-level or multi-level down mixing processing and analog-to-digital conversion processing on the radio frequency signal, to obtain a digital baseband signal or a digital intermediate frequency signal. A sequence of the down mixing processing and the analog-to-digital conversion processing is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 913 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmit circuit, or the like.

It should be noted that the communication apparatus 900 shown in FIG. 9 may be specifically configured to implement the steps implemented by the radio frequency module or the processing module in the foregoing method embodiments, and implement technical effects corresponding to the radio frequency module or the processing module. For specific implementations of the communication apparatus 900 shown in FIG. 9, refer to the descriptions in the foregoing method embodiments. Details are not described herein again.

Division into modules in this application is an example, is merely logical function division, and may be other division in an actual implementation. In addition, functional modules in embodiments of this application may be integrated into one processor, or may exist alone physically, or two or more modules are integrated into one module. The integrated module may be implemented in a form of hardware, or may be implemented in a form of a software functional module.

All or some of the technical solutions provided in this application may be implemented by software, hardware, firmware, or any combination thereof. When the software is used to implement embodiments, all or some of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this disclosure, without a logical contradiction, mutual reference may be made between examples. For example, mutual reference may be made between methods and/or terms in method examples, mutual reference may be made between functions and/or terms in apparatus examples, and mutual reference may be made between functions and/or terms in the apparatus examples and the method examples.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An energy saving method, comprising:
operating, by a radio frequency module, a target energy saving mode in M energy saving modes, wherein M is an integer greater than or equal to 2; and
the radio frequency module comprises N components, and when P components in the N components are shut down, the radio frequency module operates one energy saving mode in the M energy saving modes, wherein N is an integer greater than or equal to 2, and P is a positive integer.

2. The method according to claim 1, wherein the N components comprise at least two of the following:
a power amplifier, a digital-to-analog converter, an analog-to-digital converter, or a filter.

3. The method according to claim 1 or 2, wherein the method further comprises:
receiving, by the radio frequency module, first information, wherein the first information indicates at least one of the target energy saving mode, an energy saving manner, and energy saving time information; and
the operating, by a radio frequency module, a target energy saving mode in M energy saving modes comprises:
operating, by the radio frequency module, the target energy saving mode in the M energy saving modes based on the first information.

4. The method according to claim 3, wherein the energy saving manner comprises at least one of the following:
channel shutdown, subframe shutdown, carrier shutdown, deep sleep, or symbol shutdown.

5. The method according to claim 3 or 4, wherein the energy saving time information comprises at least one of the following:
a start moment, an end moment, or duration.

6. The method according to any one of claims 3 to 5, wherein the first information is from a processing module, and the radio frequency module and the processing module are in a same network device.

7. The method according to claim 6, wherein the processing module is a baseband unit BBU.

8. The method according to any one of claims 1 to 7, wherein the radio frequency module is any one of the following:
a radio remote unit RRU, an active antenna unit AAU, or a remote relay node RRN.

9. The method according to any one of claims 1 to 8, wherein the method further comprises:
sending, by the radio frequency module, second information, wherein the second information indicates that the M energy saving modes are supported.

10. An energy saving method, comprising:
determining, by a processing module, first information, wherein the first information indicates a target energy saving mode in M energy saving modes, and M is an integer greater than or equal to 2; and
sending, by the processing module, the first information to a radio frequency module, wherein
the radio frequency module comprises N components, and when P components in the N components are shut down, the radio frequency module operates one energy saving mode in the M energy saving modes, wherein N is an integer greater than or equal to 2, and P is a positive integer.

11. The method according to claim 10, wherein the N components comprise at least two of the following:
a power amplifier, a digital-to-analog converter, an analog-to-digital converter, or a filter.

12. The method according to claim 10 or 11, wherein the first information further indicates at least one of an energy saving manner and energy saving time information.

13. The method according to claim 12, wherein the energy saving manner comprises at least one of the following:
channel shutdown, subframe shutdown, carrier shutdown, deep sleep, or symbol shutdown.

14. The method according to claim 12 or 13, wherein the energy saving time information comprises at least one of the following:
a start moment, an end moment, or duration.

15. The method according to any one of claims 12 to 14, wherein the radio frequency module and the processing module are in a same network device.

16. The method according to claim 15, wherein the processing module is a baseband unit BBU.

17. The method according to any one of claims 10 to 16, wherein the radio frequency module is any one of the following:
a radio remote unit RRU, an active antenna unit AAU, or a remote relay node RRN.

18. The method according to any one of claims 10 to 17, wherein the method further comprises:
receiving, by the processing module, second information, wherein the second information indicates that the M energy saving modes are supported; and
the first information is determined based on at least the second information.

19. The method according to any one of claims 10 to 18, wherein the first information is determined based on at least historical traffic information.

20. A communication apparatus, comprising a processing unit, wherein the processing unit is configured to perform the method according to any one of claims 1 to 19.

21. A communication apparatus, comprising at least one processor and a memory, wherein the at least one processor is coupled to the memory, and the processor is configured to perform the method according to any one of claims 1 to 19.

22. A computer-readable storage medium, wherein the medium stores instructions, and when the instructions are executed by a computer, the method according to any one of claims 1 to 19 is implemented.

23. A computer program product, comprising instructions, wherein when the instructions are run on a computer, the computer is enabled to perform the method according to any one of claims 1 to 19.
